# EUROPEAN PATENT APPLICATION

(11) **EP 2 863 594 A1**
(43) Date of publication of application: **22.04.2015**
(21) Application number: 13306441.0
(22) Date of filing: 18.10.2013
(51) Int. Cl.: H04L 12/715

(54) **Metrics computing in a network with at least two transport layers**

(71) Applicant: ALCATEL LUCENT, 92100 Boulogne-Billancourt (FR)
(72) Inventor: Peloso, Pierre, 91620 NOZAY (FR); Nikolayev, Maksym, 91620 NOZAY (FR)
(74) Representative: Novagraaf Technologies

(57) **Abstract**

A method for computing metrics in a network comprising at least two layers (II, III), each layer comprising resources and a set of routing costs metrics, one of the two layers being the higher level layer (II) carrying some of its traffic through the use of virtual links, each virtual link using at least one connection of the other layer (III), named lower level layer, said method comprises the step of defining the cost metric of at least one virtual link as a function of at least one characteristic of the at least one connection used by said virtual link.

## Description

### Field of the Invention

The present invention relates to computing metrics in a network and more particularly but not exclusively, in a network comprising at least two layers, each layer comprising resources and a set of routing costs metrics, one of the two layers being the higher level layer carrying some of its traffic through the use of virtual links, each virtual link using at least one connection of the other layer, named lower level layer.

### Background

In a basic IP network with a single transport layer, router computes routes to other routers to transfer data by computing the cost of each possible path and by choosing the path having the smallest cost. The path cost is often defined as the cumulation of the metrics of each network segment/resource used by the path. These metrics may be based on link utilization, number of hops, capacity of the path and/or any other relevant characteristic.

Telecommunications networks use a set of resources with different technologies traditionally, classified according to the following layering :
- Packets,
- Cells and frames (ATM, Frame Relay, Ethernet),
- Circuits associated with TDM circuit switching matrices (electronic cross-connect, e.g. OTN, SDH, PDH),
- Wavelengths associated optical switches (optical cross-connects and multiplexers based on Wavelength Division Multiplexing),
- Optical fibers.

The above classification corresponds in fact to the canonical encapsulation hierarchy of theoretical telecommunication networks. In real networks, the technologies at play and their stacking may differ, defining their specific encapsulation hierarchy.

This hierarchy defines different layers; a layer at a higher level may use the transport capacity of the transport layer below, and hence its resources.

Consequently, a layered network (aka multi-layer network) may be defined as comprising at least a higher level layer and a lower level layer, each layer comprising resources and a set of routing cost metrics, the higher level layer using the lower level layer to carry data, in that case the lower layer will also be referred to as the transport layer with regards to the higher layer as it carries its data.

In order to carry traffic of the higher level layer inside the lower level layer, connections are created in the lower level layer between two given switching equipments (named ingress and egress). This connection is used to support a link (aka a virtual link) between two switching equipments of the higher level layer connected respectively to the ingress and egress switching equipments of the lower level layer. A given virtual link of the higher level layer may use more than one connection of the lower level layer.

By switching equipment, we means any system or circuit which is able to (re)direct incoming data to a specific link or route in order to transfer the data to their specific destination.

One of the assets of such layered networks relying on virtual links is to allow the optimization of the resource usage thanks to judicious bypasses in the lower layers. Bypasses are achieved by transiting connections through the lower-layer nodes without using higher layer resources; hence the higher layer traffic can be carried from one end to the other of the higher layer while using less equipment in the higher layer.

A quite common example of such a layered network is IP over optical networks, where the scenarios correspond to two or three transport layers: IP over WDM (Wavelength-Division Multiplexing), IP over OTN (Optical Transport Network) over WDM, SDH (Synchronous Digital Hierarchy) over OTN over WDM or SDH over WDM.

Specifically in IP over optical scenarios, the WDM bypasses need no dedicated interfaces on the switching equipments, hence the optimization brought by bypasses is all the more beneficial. When the higher level layer is relying on IP technologies, the virtual links may also be named Forwarding Adjacencies, while in some other cases of the above scenarios they may be named tunnels, depending on the layer used as reference.

### Summary

However, each layer having its own metric to compute the cost of a route, it is often difficult to find the best route that optimizes the resource usage.

In a first embodiment, a method for computing metrics in a network comprising at least two layers, each layer comprising resources and a set of routing costs metrics, one of the two layers being the higher level layer carrying some of its traffic through the use of virtual links, each virtual link using at least one connection of the other layer, named lower level layer, said method comprising the step of defining the cost metric of at least one virtual link as a function of at least one characteristic of the at least one connection used by said virtual link.

Advantageously, the method allows to include in the routing computation of any virtual link, cost metrics of all concerned resources of lower level layers and is thus able to achieve a global optimization of the network.

This embodiment may comprises other features, alone or in combination, such as:
- said higher level layer further comprising at least one physical link not using resources of said lower level layer, the method further comprises the step of defining the cost metric of said physical link, said step using a mathematical space compatible with the cost metric definition of said virtual links such that functions and/or operations can be used on a mix of virtual link cost metrics and physical link cost metrics;
- said mathematical space is chosen for fulfilling a given optimization criteria of the network;
- the virtual link cost metric is a function further including at least one characteristic of interconnections used by said virtual link to connect said higher level layer and said lower level layer;

In a second embodiment, a method comprises sub methods as disclosed here above in order to compute metrics for dimensioning a multilayer network having a dissymmetrical topology.

In a third embodiment, a method comprises sub methods as disclosed here above in order to compute metrics for dimensioning a multilayer network, said network comprising a third layer, the higher level layer using at least partly resources of said third layer either directly or through the lower level layer.

In these methods, the layers are chosen among the list of IP, MPLS, Ethernet, SDH, OTN, WDM transport layers.

In a fourth embodiment a digital data storage medium is encoding a machine-executable program of instructions to perform the methods disclosed here above.

In a fifth embodiment, a network equipment is programmed or configured to perform a method disclosed here above for computing a metric needed for route calculation.

The network equipment may further comprise an interface to the lower level layer adapted to request and receive characteristics from the lower level layer.

Wherein the higher level layer having to route data between two points of the network, the network equipment may further comprise computation capacities for computing the cost of multiples routes joining said two points and selects one route optimizing the cost metrics.

In a sixth embodiment, a switching equipment in a network comprising at least two layers, each layer comprising resources and a set of routing costs metrics, one of the two layers being the higher level layer carrying some of its traffic through the use of virtual links, each virtual link using connections of the other layer, named lower level layer, said switching equipment being a resource of said lower level layer comprises an interface for providing characteristics associated to connections of the lower level layer used by a virtual link on request on the higher level layer.

In a seventh embodiment, a computer is programmed or configured to perform a method as disclosed here above for dimensioning a network.

In a eighth embodiment, a system for computing metrics in a network comprising at least two layers, each layer comprising resources and a set of routing costs metrics, one of the two layers being the higher level layer carrying some of its traffic through the use of virtual links, each virtual link using connections of the other layer, named lower level layer, said system comprises means for defining the cost metric of each virtual link as a function of at least one characteristic of the connections used by said virtual link.

In a ninth embodiment, a network comprises at least two layers, each layer comprising resources and a set of routing costs metrics, one of the two layers being the higher level layer carrying some of its traffic through the use of virtual links, each virtual link using connections of the other layer, named lower level layer. The network further comprises a system as in paragraph here above.

### Brief Description of the Figures

Some embodiments of apparatus and/or methods in accordance with embodiments of the present invention are now described, by way of example only, and with reference to the accompanying drawings, in which :
- The Figure 1 schematically illustrates a network with two layers;
- The Figure 2 illustrates the network of Figure 1 with routing metrics for all links;
- The Figure 3 schematically illustrate a network to transfer data between two IP routers;
- The Figure 4 schematically illustrates a flowchart of routing metric transmission; and
- The Figure 5 schematically illustrates block diagrams of two routers adapted to communicate routing metrics.

### Description of Embodiments

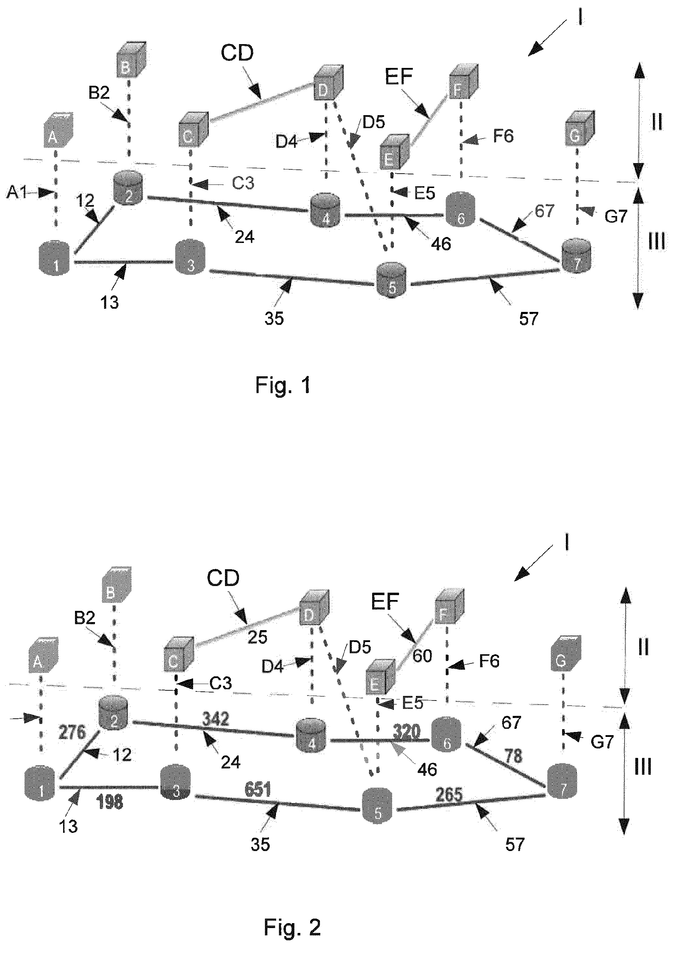

In reference to Figure 1, a network I comprises two layers II, III.

The higher level layer II comprises resources A, B, C, D, E, F and G. For instance, the higher level layer II is an IP layer and its resources A, B, C, D, E, F are IP routers. Between some of these resources, there are direct IP links, or physical links. In Figure 1, IP routers C and D are connected by an IP link CD and routers E and F are connected by an IP link EF.

The lower level layer III comprises resources 1, 2, 3, 4, 5, 6, 7. For instance, the lower level layer III is an optical transport layer and its resources/nodes 1, 2, 3, 4, 5, 6, 7 are optical routers. Between some of these resources, there are optical links. In Figure 1, optical router 1 is connected to optical router 2 by an optical link 12, and to optical router 3 by optical link 13, etc.

The higher level layer II is connected to the lower level layer III by means of interfaces A1, B2, C3, D4, D5, E5, F6, G7.

Let us suppose that the route between nodes C and G needs to be computed, while the following virtual links are already existing:
1. C - 3 - 5 - 7 - G (which uses optical regeneration for reach considerations in 5)
2. D-5-7-G
3. C - 3 - 1 -A
4. A - 1 - 2 - 4 - 6 - 7 - G

The route computed between C and G will be the one for which the sum of the metrics is the smallest. If the metrics correspond to the number of hops, the route that will be chosen is achieved by virtual link number 1, though it is likely that the operator would rather have a set of metrics that would minimize the overall number of resources used in all the layers.

Therefore, there is a need to have metrics that carry such an information for their minimization to achieve the goal of the operator, which in that case would be either:
- successively using IP direct link CD and virtual link number 2 (DG), (provided higher layer interfaces are less expensive than inter layer interfaces),
- successively using virtual link number 3 (CA) and virtual link number 4 (AG) (provided higher layer interfaces are more expensive than inter layer interfaces).

Figure 2 illustrates the network of Figure 1 with metrics associated to each link. The link CD, respectively EF, has a metric of 25, respectively 60. For instance, the metric of the higher level layer 13 is a TE metric inversely proportional to the unused load. The link 12, respectively 13, has a metric of 276, respectively 198, etc. For instance, the metric of the lower level layer III is a metric corresponding to the length of the fiber link between the nodes.

A problem arises, in this example, with the use of two metrics. The comparison between routes becomes cumbersome as the two metrics have nothing in common.

In the embodiment, metrics are modified so that they share a same mathematical space so that links of each layer may be compared. For instance the mathematical space can be the Capital Expenses (CapEx) cost of the link, the Operational Expenses (OpEx) cost of the link, the consumption cost of the link or any other space for which the metric can be applicable to links of each of the layers. More generally speaking, having a compatible mathematical space for cost metric definitions of virtual links and physical links allows to define operations and/or functions to any mix of these cost metrics.

The mathematical space is preferably chosen for fulfilling a given optimization criteria of the network. For instance, if it is the CapEx which is chosen, it means that the network is optimized in relation with the investments put in the network.

The chosen space is applicable to all layers, and more specifically to the resources used to setup links in any layer, and between layers.

Once the space is chosen, the cost of each link is computed by combining the cost of each resource used to setup this link. If only part of a given resource is used to setup the link, then the cost of the link will be increased by the corresponding ratio of the resource cost.

Hereafter, an example is given to illustrate the embodiment.

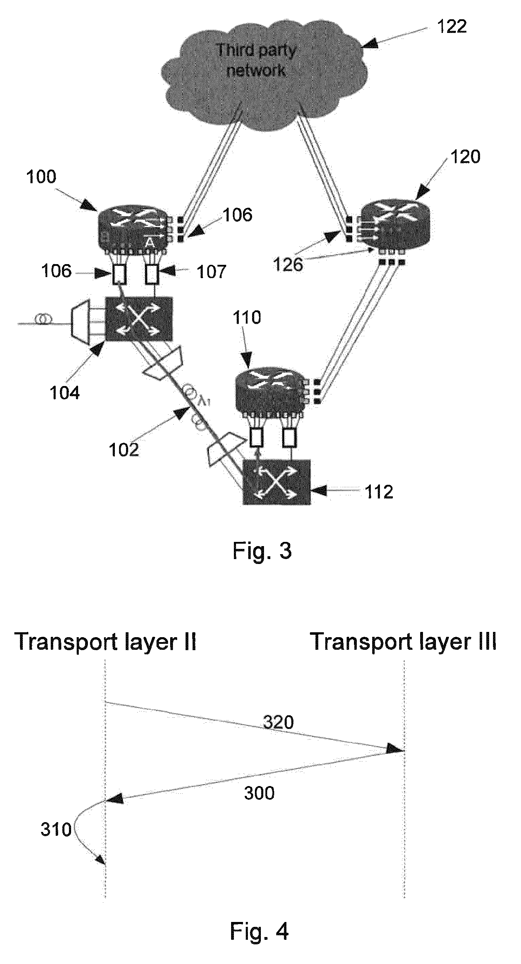

Figure 3 illustrates a 3-node network. The nodes are composed of an IP router 100 that may or may not be connected to a WDM optical layer 102 via an optical cross-connect (OXC) 104. The OXC is connected to the IP router 100 by transponders 106, 107. The WDM optical layer 102 may connect IP router 100 to another IP router 110 via a second optical cross-connect 112. The IP router 100 may also connect to a third IP router 120 through a third-party network 122 by means of short reach interfaces 106, 126. Each router may be defined by a list of router ports.

As example, suppose that the metrics correspond to a normalized CapEx cost according to the following table

| Equipment | Unitary Cost(€) | Capacity(Gbps) | Metric(€/Gbps) |
|---|---|---|---|
| Router port | 50 | 10 | 5 |
| OXC port | 10 | 40 | 0,25 |
| Transponder | 120 | 40 | 3 |
| Short reach interface | 20 | 10 | 2 |
| 3^{rd} party transport | --- | --- | 20 |

Suppose that a link needs to be computed between router 101 and router 120 for the same origin, the same destination and the same capacity.

A first link A connects 3 router ports of router 100 to 3 router ports of router 120 via short reach interfaces 106, 126 and the third party network.

The metric of link A is the sum of the costs of the router port, the short reach interface, the 3^{rd} party network, the second short reach interface and the router port, i.e. 5 + 2 + 20 + 2 + 5 = 34.

A second link B connects router 100 and router 120 through the WDM layer by provisioning a new wavelength as well as 6 router ports and 6 optical cross-connect ports and connects three router ports of router 110 to three router ports of router 120 via three short reach interfaces.

The metric of link B is the sum of the costs of router ports, transponders, 4 OXC ports, transponder, router port, router port, 2 short reach interfaces and router ports, i.e. 5 + 3 + 4*0,25 + 3 +5 +5 +2*2 + 5 = 31.

Consequently, with this metric, the best route is through link B.

Advantageously, the path computed by using the embodiment takes into consideration the constraint of each layer, hence the cost is not optimized in one layer at the expense of blind costs in the other layer.

The embodiment for computing metrics may be used for dynamically choosing a route and/or for dimensioning a network.

In dynamic routing, a switching equipment of the higher level layer needs to get information from the lower level layer in order to compute the metrics of virtual links.

A first way is to get this routing information by requesting equipment of the lower level layer to choose the best route between two points. For instance, in the example, the router C may request the router 3 to give the best route, in the lower level layer II, to go to router 7.

Let suppose that the metrics in the lower level layer II are as shown in Figure 2.

Between router 3 and 7, there are two routes:
- Route 3 - 5 - 7: metric = 651 + 265 = 916
- Route 3 - 1 - 2 - 4 - 6 - 7: metric = 198 + 276 + 342 + 320 + 78 = 1214.

Consequently, the router 3 answer to router C is "route 3 - 5 -7".

Router C may request also other information for route passing through router D such as the best route between router 4 and router 7.

An issue is then to select the best global route by having only partial routing information on the different layers.

A second, and preferred, way, Figure 4, is to provide, step 300, to the higher level layer II by the lower level layer III routing costs associated to resources of the lower level layer; and then to compute, step 310, by the higher level layer the cost of a virtual links for transferring data as a function of the routing costs associated to the resources used by the virtual link in the higher and lower level layers, and to get the same information for physical link in a traditional way.

Therefore, the router C, in the example, has all the routing information to make a global optimization of the network resources.

As the router C needs to compute a route, the router C requests the routing information, step 320, and, at step 310, computes the cost of multiples routes joining the two points C, G and selects one route optimizing the cost metrics.

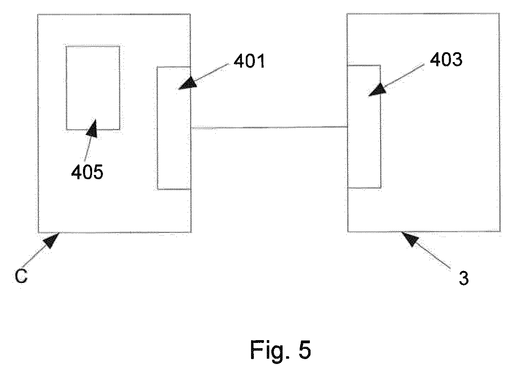

For instance, Figure 5, the router C and router 3 comprises each, further to the classical content of a router, an interface 401, 403 specifically adapted to communicate to the other router the request for routing information as well as the requested routing information respectively. The router C further comprises a cost computer 405 for computing the cost of multiples routes joining two points and selecting one route optimizing the cost metrics. The cost computer may be implemented as a general processor programmed with a machine-executable program of instructions adapted for execution of the methods disclosed here above.

In another embodiment, the routers are connected to a specific equipment different of the routers and containing the cost metrics of the lower level layer. In the embodiment, the router C requests thus cost metrics for the lower level layer from the specific equipment.

However, requesting routing information from all layers is not limited to the selection of the best route to transfer data. It may be used also to dimension a network. Indeed, by computing the metrics of all routes, it is possible to determine if the network is able to support a predetermined load or if adding some resources increases the network capability, or where to put the resource to optimize the network, etc. It is particularly useful in case of a network having a dissymmetrical topology, meaning that in the network each layer node can be connected to none or a few nodes of the other layer, and/or three or more layers where classical dimensioning methods obtain limited results.

As explained here above, the different embodiments disclosed here are particularly useful in the context of a layered network of IP over optical networks where the different transport layers are among the list of IP, MPLS (MultiProtocol Label Switching), Ethernet, SDH, OTN, WDM transport layers.

A person of skill in the art would readily recognize that steps of various above-described methods can be performed by programmed computers. Herein, some embodiments are also intended to cover program storage devices, e.g., digital data storage media, which are machine or computer readable and encode machine- executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any routers shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for computing metrics in a network comprising at least two layers (II, III), each layer comprising resources and a set of routing costs metrics, one of the two layers being the higher level layer (II) carrying some of its traffic through the use of virtual links, each virtual link using at least one connection of the other layer (III), named lower level layer, said method comprising the step of defining the cost metric of at least one virtual link as a function of at least one characteristic of the at least one connection used by said virtual link.

2. Method according to claim 1, wherein said higher level layer further comprising at least one physical link not using resources of said lower level layer, the method further comprises the step of defining the cost metric of said physical link, said step using a mathematical space compatible with the cost metric definition of said virtual links such that functions and/or operations can be used on a mix of virtual link cost metrics and physical link cost metrics.

3. Method according to claim 2, wherein said mathematical space is chosen for fulfilling a given optimization criteria of the network.

4. Method according to claim 1, 2 or 3, wherein the virtual link cost metric is a function further including at least one characteristic of interconnections used by said virtual link to connect said higher level layer and said lower level layer.

5. Method comprising sub methods according to any one of claims 1 to 4 in order to compute metrics for dimensioning a multilayer network having a dissymmetrical topology.

6. Method comprising sub methods according to any one of claims 1 to 4 in order to compute metrics for dimensioning a multilayer network, said network comprising a third layer, the higher level layer using at least partly resources of said third layer either directly or through the lower level layer.

7. Method according to any one of claims 1 to 6, wherein the layers are chosen among the list of IP, MPLS, Ethernet, SDH, OTN, WDM transport layers.

8. A digital data storage medium encoding a machine-executable program of instructions to perform a method according to any one of claims 1 to 7.

9. A network equipment programmed or configured to perform a method according to any one of claims 1 to 7 for computing a metric needed for route calculation

10. The network equipment according to claim 9, further comprising an interface (401) to the lower level layer adapted to request and receive characteristics from said lower level layer.

11. The network equipment according to claim 9 or 10, wherein the higher level layer having to route data between two points of the network, said switching equipment further comprises a cost computer (405) for computing the cost of multiples routes joining said two points and selects one route optimizing the cost metrics.

12. A switching equipment in a network comprising at least two layers, each layer comprising resources and a set of routing costs metrics, one of the two layers being the higher level layer carrying some of its traffic through the use of virtual links, each virtual link using connections of the other layer, named lower level layer, said switching equipment being a resource of said lower level layer comprises an interface (403) for providing characteristics associated to connections of the lower level layer used by a virtual link on request on the higher level layer.

13. A computer programmed or configured to perform a method according to claim 5 or 6 for dimensioning the network.

14. System for computing metrics in a network comprising at least two layers, each layer comprising resources and a set of routing costs metrics, one of the two layers being the higher level layer carrying some of its traffic through the use of virtual links, each virtual link using connections of the other layer, named lower level layer, said system comprising means for defining the cost metric of each virtual link as a function of at least one characteristic of the connections used by said virtual link.

15. Network comprising at least two layers, each layer comprising resources and a set of routing costs metrics, one of the two layers being the higher level layer carrying some of its traffic through the use of virtual links, each virtual link using connections of the other layer, named lower level layer, said network further comprising a system for routing data according to claim 14.
